# EUROPÄISCHE PATENTANMELDUNG

(11) **EP 4 700 626 A1**
(43) Veröffentlichungstag der Anmeldung: **25.02.2026**
(21) Anmeldenummer: 24195821.4
(22) Anmeldetag: 22.08.2024
(51) Int. Cl.: G06F 21/60, G06F 21/72, G06F 21/76

(54) **VERFAHREN ZUR IMPLEMENTIERUNG EINER KRYPTOGRAPHISCHEN FUNKTIONALITÄT IN EINEM HALBLEITERBAUSTEIN UND HALBLEITERBAUSTEIN**

(71) Anmelder: Siemens Aktiengesellschaft, 80333 München (DE)
(72) Erfinder: Falk, Rainer Dr., 85435 Erding (DE)
(74) Vertreter: Siemens Patent Attorneys

(57) **Zusammenfassung**

Es wird ein Halbleiterbaustein mit konfigurierbarer Härtung einer Krypto-Implementierung bereitgestellt. Der Halbleiterbaustein umfasst eine hardwarebasierte Halbleiterschaltung, die einen Krypto-Algorithmus implementiert, und einen nichtflüchtigen Speicher, der Konfigurationsinformationen speichert. Die Robustheitsqualität der Krypto-Implementierung wird basierend auf den Konfigurationsinformationen angepasst. Der Halbleiterbaustein umfasst eine Steuerlogik, die konfiguriert ist, eine Variante oder Qualität der Härtung bei der Durchführung einer Krypto-Operation zu aktivieren. Die Härtungsmaßnahmen können Selbsttests, Seitenkanal-Härtung, Berechnungswiederholungen, zufällige Verzögerungen, Manipulationssensorüberwachung und Taktsignalmanipulation umfassen. Der Halbleiterbaustein stellt eine kryptographisch geschützte Attestierung bereit, die die aktivierte Härtungsqualität bestätigt. Ein Manipulationsdatenrekorder kann Rohdaten während der Ausführung von Krypto-Operationen oder sicherheitskritischen Berechnungen zur nachträglichen Überprüfung aufzeichnen.

## Beschreibung

Die Erfindung betrifft ein Verfahren zur Implementierung einer kryptographischen Funktionalität in einem Halbleiterbaustein und einen Halbleiterbaustein.

Halbleiterbausteine wie ASICs, SOCs, CPUs und Mikrocontroller implementieren häufig kryptographische Funktionen für verschiedene Sicherheitszwecke, einschließlich sicherem Boot, sicherem Debug-Zugriff und Hardware-Krypto-Beschleunigung. Diese kryptographischen Implementierungen spielen eine entscheidende Rolle beim Schutz sensibler Daten und bei der Gewährleistung der Integrität von Systemoperationen.

Die Sicherheitskonfiguration für Funktionen wie sicheres Booten und Debug-Zugriff wird typischerweise in nichtflüchtigem, einmal programmierbarem Speichern wie OTP (One-Time Programmable), eFuse oder AntiFuse-Speicher gespeichert. Dies ermöglicht die Programmierung sicherer Konfigurationen, die nach dem Festsetzen nicht leicht geändert werden können.

Während bekanntermaßen die funktionale Korrektheit kryptographischer Algorithmen relevant ist, stellt zusätzlich aber auch ihre robuste und angriffssichere Implementierung eine eigene Herausforderung dar. Verschiedene Härtungsmaßnahmen können eingesetzt werden, um die Sicherheit kryptographischer Implementierungen zu verbessern. Dazu können Selbsttests, mehrfache Berechnungen zur Abwehr von Fehlerangriffen, Berechnungen mit randomisiert redundant codierten Daten zur Minderung passiver Seitenkanal-Angriffe, die auch als maskierte Implementierung eines kryptographischen Algorithmus oder kryptographischen Verfahrens bezeichnet werden kann, sowie die Verwendung randomisierter Verzögerungen oder gestreuter Taktsignale gehören.

Diese Härtungsmaßnahmen bringen jedoch oft Kompromisse mit sich. Sie können die Leistung erheblich beeinflussen und zu Overhead in Bezug auf Verarbeitungszeit, Speicherbedarf und Stromverbrauch führen. Das Ausmaß der angewandten Härtung kann variieren, z.B. einfach maskiert, doppelt maskiert, dreifach maskiert, doppelte oder dreifache oder vierfache Wiederholung einer Berechnung, Zeitbereich für eine randomisierte Verzögerung. Dabei können verschiedene Stufen unterschiedliche Grade an Schutz auf Kosten erhöhter Leistungsbeeinträchtigung bieten.

Darüber hinaus kann die Implementierung bestimmter Härtungsmaßnahmen Auswirkungen auf Exportkontrollbeschränkungen oder Importvorschriften in verschiedenen Rechtsordnungen haben. Dies kann Herausforderungen für Halbleiterhersteller und -nutzer schaffen, die Sicherheitsanforderungen mit regulatorischer Compliance auf verschiedenen Märkten in Einklang bringen müssen.

Mit der sich weiterentwickelnden Bedrohungslandschaft und der Ausweitung der Anwendungen für sichere Halbleiterbausteine wächst der Bedarf an flexiblen und anpassungsfähigen Ansätzen zur Implementierung kryptographischer Funktionalitäten. Benutzer dieser Komponenten können je nach ihren spezifischen Anwendungsfällen, Betriebsumgebungen und regulatorischen Einschränkungen unterschiedliche Sicherheitsanforderungen haben.

Die Bewältigung dieser Herausforderungen bei gleichzeitiger Aufrechterhaltung des erforderlichen Sicherheits- und Leistungsniveaus ist ein fortlaufender Entwicklungsbereich auf dem Gebiet des Halbleiterdesigns und der kryptographischen Implementierung.

Dementsprechend besteht eine Aufgabe der vorliegenden Erfindung darin, ein verbessertes Verfahren zur Implementierung einer kryptographischen Funktionalität in einem Halbleiterbaustein bereitzustellen. Darüber hinaus besteht eine Aufgabe der vorliegenden Erfindung darin, einen verbesserten Halbleiterbaustein bereitzustellen.

Dieses Problem der Erfindung wird durch ein Verfahren mit den in Anspruch 1 enthaltenen Merkmalen und durch einen Halbleiterbaustein mit den in Anspruch 10 enthaltenen Merkmalen gelöst. Vorteilhafte Aspekte der vorliegenden Erfindung sind in den jeweiligen abhängigen Ansprüchen, der folgenden Beschreibung und der Zeichnung enthalten.

Das erfindungsgemäße Verfahren ist ein Verfahren zur Implementierung mindestens einer kryptographischen Funktionalität in einem Halbleiterbaustein. Das Verfahren umfasst die Implementierung der kryptographischen Funktionalität mit einer Robustheit, die von Konfigurationsinformationen des Halbleiterbausteins abhängt. Dieser Ansatz bietet den Vorteil, einem Anwender des Halbleiterbausteins eine flexible Anpassung des Sicherheitsniveaus der kryptographischen Implementierung basierend auf spezifischen Komponentenanforderungen oder Anwendungsfällen zu ermöglichen. Die kryptographische Funktionalität des Halbleiterbausteins aktiviert zweckmäßig bei der Durchführung einer kryptographischen Operation eine oder mehrere Robustheitsvarianten (Härtungsmaßnahmen z.B. gegen Fehlerangriffe oder Seitenkanalangriffe, z.B. Mehrfachberechnungen und/oder Verwendung einer redundanten, randomisierten Kodierung) abhängig von der eingerichteten Konfigurationsinformationen des Halbleiterbausteins. Die kryptographische Funktionalität kann insbesondere eine Signaturprüfung bei einem Secure Boot sein, eine Authentisierungsprüfung bei einem Debug-Zugriff, eine Netzwerkkommunikationsverschlüsselung, eine Busverschlüsselung eines Halbleiterbaustein-internen Datenübertragungs-Buses, eine Busverschlüsselung eines Halbleiterbaustein-externen Datenübertragungs-Buses, eine Speicherverschlüsselung eines über eine Schnittstelle des Halbleiterbausteins koppelbaren Arbeitsspeichers, eine Verschlüsselungsoperation oder eine Entschlüsselungsoperation eines Krypto-Beschleunigers des Halbleiterbausteins, der von auf dem Halbleiterbaustein ausgeführten Programmcode ansprechbar ist, eine Signaturoperation oder eine Signaturverifikationsoperation eines Krypto-Beschleunigers des Halbleiterbausteins, der von auf dem Halbleiterbaustein ausgeführten Programmcode ansprechbar ist, und/oder eine Schlüsselgenerierungsfunktion oder eine Schlüsselableitungsfunktion sein.

Es versteht sich, dass anstelle der einen kryptographischen Funktionalitäten auch mehrere kryptographische Funktionalitäten vorhanden sein können, welche jeweils mit einer Robustheit, die jeweils von Konfigurationsinformationen des Halbleiterbausteins abhängen.

Gemäß vorteilhaften Weiterbildungen der Erfindung umfasst das Verfahren optional eines oder mehrere der nachfolgend beschriebenen Merkmale:
Die kryptographische Funktionalität umfasst vorzugsweise eine Konfiguration einer hardwarebasierten Halbleiterschaltung des Halbleiterbausteins. Dies bietet den Vorteil einer Sicherheitsimplementierung auf Hardwareebene, die im Vergleich zu reinen Softwarelösungen widerstandsfähiger gegen bestimmte Arten von Angriffen sein kann.

Die Halbleiterschaltung bildet vorzugsweise einen Krypto-Beschleuniger und/oder einen sicheren Boot und/oder einen Manipulationsschutz und/oder eine Grafikprozessorschaltung und/oder eine Netzwerkkommunikationsverschlüsselungsschaltung. Diese Vielseitigkeit ermöglicht eine verbesserte Sicherheit für verschiedene kritische Komponenten und Funktionen des Halbleiterbausteins.

Die Konfiguration zur Festlegung der Robustheit der kryptographischen Funktionalität des Halbleiterbausteins ist vorzugsweise in einem einmal programmierbaren nichtflüchtigen

Speicher des Halbleiterbausteins implementiert. Dieses Merkmal bietet den Vorteil, unbefugte Änderungen an der Sicherheitskonfiguration nach der ersten Programmierung zu verhindern. Vorzugsweise sind mehrere kryptographische Funktionalitäten implementiert, für die jeweils eine zugeordnete Robustheitskonfiguration in dem einmal programmierbaren nichtflüchtigen Speicher des Halbleiterbausteins implementiert ist. Dies hat den Vorteil, dass für die mehreren kryptographischen Funktionalitäten jeweils eine unterschiedliche Robustheitsvariante vom Anwender festlegbar ist.

Eine Implementierung einer oder mehrerer kryptographischer Funktionalitäten mit mehreren Robustheitsstufen wird bevorzugt so durchgeführt, dass die eine oder mehreren kryptographischen Funktionalitäten mit den mehreren Robustheitsstufen während der Laufzeit des Halbleiterbausteins zugänglich sind. Dies bietet den Vorteil einer dynamischen Anpassung des Sicherheitsniveaus basierend auf Echtzeitanforderungen oder Bedrohungsstufen.

Eine Steuerlogik ist geeigneterweise in vorteilhaften Weiterbildungen des erfindungsgemäßen Verfahrens vorgesehen, die auf die eine oder mehreren kryptographischen Funktionalitäten mit den mehreren Robustheitsstufen in Abhängigkeit von einer oder mehreren Krypto-Operationen zugreifen kann. Dies ermöglicht eine optimierte Leistung, indem je nach Bedarf angemessene Sicherheitsstufen auf verschiedene Operationen angewendet werden können. Weiterhin ist möglich, in dem einmal programmierbaren nichtflüchtigen Speicher des Halbleiterbausteins die für eine kryptographische Funktionalität zulässigen Robustheitsvarianten einzurichten, aus denen eine Robustheitsvariante bei Durchführung, d.h. Verwendung, der kryptographischen Funktionalität dynamisch auswahlbar ist, insbesondere durch einen auf dem Halbleiterbaustein ausgeführten Programmcode und/oder abhängig von einem dem Halbleiterbaustein bereitgestellten Steuersignal.

Die Steuerlogik ist in bevorzugten Weiterbildungen der Erfindung mit einer digitalen Schaltung und/oder mit einer Zustandsmaschine und/oder mit einem Mikrocode und/oder mit einer Firmware gebildet. Diese Flexibilität in der Implementierung ermöglicht eine optimale Integration mit verschiedenen Halbleiterarchitekturen.

Die ausgewählte Robustheitsvariante wird in einer zweckmäßigen Weiterbildung der Erfindung mittels einer Attestierung bescheinigt und die Attestierung vorzugsweise mittels einer Schnittstelle des Halbleiterbausteins zur Verfügung gestellt. Dieses Merkmal bietet den Vorteil, eine externe Überprüfung des Sicherheitsniveaus zu ermöglichen, was für die Compliance und das Vertrauen in bestimmten Anwendungen entscheidend sein kann. Eine Attestierung ist eine kryptographisch geschützte Bestätigung der konfigurierten Robustheitsvariante oder einer zugeordneten Robustheitsstufe der einen oder mehreren kryptographischen Funktionalitäten.

Die Attestierung wird vorzugsweise einem Prozessorkern des Halbleiterbausteins zur Verfügung gestellt. Dies kann interne Sicherheitsüberprüfungen und adaptives Verhalten basierend auf dem aktuellen Sicherheitszustand ermöglichen.

Gemäß einer weiteren Weiterbildung der vorliegenden Erfindung wird ein Halbleiterbaustein selbst bereitgestellt. Der Halbleiterbaustein ist zur Implementierung einer kryptographischen Funktionalität mit einer Robustheit ausgebildet, die von Konfigurationsinformationen des Halbleiterbausteins abhängt. Dies bietet den Vorteil einer maßgeschneiderten Sicherheitsimplementierung auf Komponentenebene.

Gemäß weiteren vorteilhaften Weiterbildungen umfasst der erfindungsgemäße Halbleiterbaustein eines oder mehrere der folgenden Merkmale:
Die Robustheit kann mit einer Attestierung bescheinigt sein. Die Halbleiterbaustein kann eine Schnittstelle umfassen, mittels derer die Attestierung ausgebbar ist. Diese Merkmale ermöglichen eine externe Überprüfung und Überwachung des Sicherheitszustands des Halbleiterbausteins.

Die Halbleiterbaustein umfasst in vorteilhaften Weiterbildungen der Erfindung einen oder mehrere Manipulationssensoren und einen Speicher, der zum Speichern von Sensordaten des einen oder der mehreren Manipulationssensoren ausgelegt ist. Dies bietet eine verbesserte physische Sicherheit, indem die Erkennung und Protokollierung von Manipulationsversuchen möglich sind. In einer weiteren vorteilhaften Weiterbildung der Erfindung können die während der Durchführung einer kryptographischen Operation erfassten Sensordaten in der Attestierung enthalten oder darin referenziert sein.

Die Halbleiterbaustein kann zweckmäßig dazu ausgelegt sein, eine Sicherheitsmaßnahme in Abhängigkeit von Sensordaten des einen oder der mehreren Manipulationssensoren auszuführen. Die Sicherheitsmaßnahme kann eine oder mehrere der folgenden Aktionen umfassen: einen Neustart und/oder Aktivieren eines ausfallsicheren Betriebsmodus und/oder Einleiten einer Resilienz-/Wiederherstellungsaktion und/oder Löschen von Schlüsseln und/oder Schreiben eines Fehlerspeichers und/oder Aktualisieren eines Manipulationsereigniszählers. Diese Merkmale bieten den Vorteil automatisierter Reaktionen auf erkannte Sicherheitsbedrohungen, was möglicherweise die Gesamtsicherheit und Zuverlässigkeit der Halbleiterbaustein verbessern kann.

Nachfolgend wird die Erfindung anhand eines in der Zeichnung dargestellten Ausführungsbeispiels näher erläutert.

Die einzige Zeichnungsfigur 1 zeigt ein Ausführungsbeispiel eines erfindungsgemäßen Halbleiterbausteins in Gestalt einer System-on-Chip-Architektur mit einer gemäß dem erfindungsgemäßen Verfahren konfigurierbaren Sicherheitshärtungsmaßnahmen schematisch in einer Prinzipskizze.

Das dargestellte Ausführungsbeispiel stellt ein erfindungsgemäßes Verfahren zur Implementierung kryptographischer Funktionalität in Halbleiterbausteinen mit einer Robustheitsstufe bereit, die basierend auf Konfigurationsinformationen angepasst werden kann. Ferner zeigt das dargestellte Ausführungsbeispiel einen erfindungsgemäßen Halbleiterbaustein.

Das erfindungsgemäße Verfahren ermöglicht eine flexible und anpassbare Sicherheitsimplementierung, die auf spezifische Anwendungsfälle, Betriebsumgebungen und regulatorische Einschränkungen zugeschnitten werden kann. Durch die Ermöglichung der Konfiguration von Robustheitsstufen können die offenbarten Verfahren und Systeme eine verbesserte Sicherheit bei gleichzeitiger Optimierung von Leistung und Stromverbrauch aufweisen. Darüber hinaus wird die Möglichkeit eröffnet, die Robustheit kryptographischer Implementierungen auch dahingehend basierend auf Konfigurationsinformationen anzupassen, dass die Einhaltung von Exportkontrollbeschränkungen oder Importvorschriften in verschiedenen Rechtsordnungen erleichtert ist.

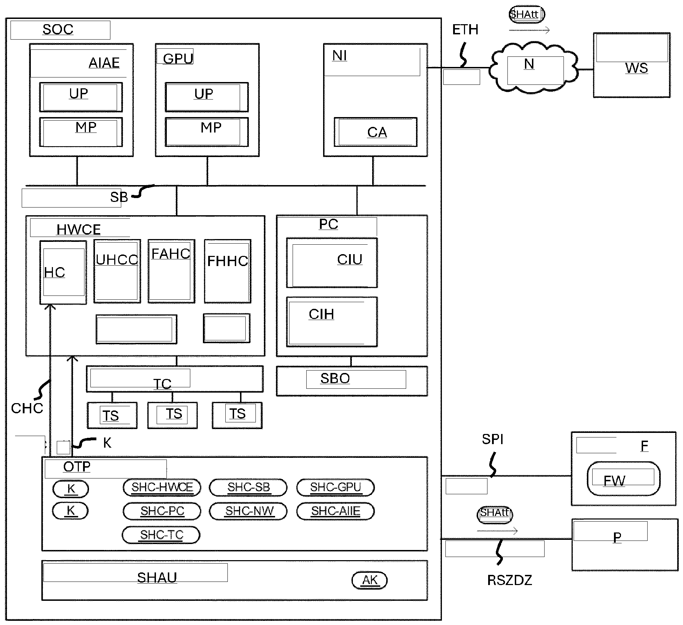

FIG. 1 zeigt einen Halbleiterbaustein in Gestalt einer System-on-Chip-Architektur SOC mit mehreren Schlüsselkomponenten. Ein Prozessorkern PC der System-on-Chip-Architektur SOC kann eine Central Intelligence Unit CIU, eine Cache Intelligence Hardware CIH und eine Einheit für sicheren Boot-Betrieb SBO umfassen. Die Central Intelligence Unit CIU kann in einigen Fällen für die Ausführung von Anweisungen und die Verwaltung der Operationen des Prozessorkerns PC verantwortlich sein. Die Cache Intelligence Hardware CIH kann zum Speichern häufig aufgerufener Daten verwendet werden, um die Leistung des Prozessorkerns PC zu verbessern. Die Einheit für sicheren Boot-Betrieb SBO kann zur Überprüfung der Integrität des Systems während des Starts verwendet werden.

Die Hardware-Krypto-Engine HWCE ist eine weitere Schlüsselkomponente der System-on-Chip-Architektur SOC. Die Hardware-Krypto-Engine HWCE kann verschiedene Härtungsvarianten wie einen Ultra-High Crypto Core UHCC, Fast Asymmetric Hardware Crypto FAHC und Fast Hash Hardware Crypto FHHC umfassen. Diese Varianten bieten unterschiedliche Sicherheits- und Leistungsniveaus für kryptographische Operationen. Zum Beispiel kann der Ultra-High Crypto Core UHCC ein hohes Maß an Sicherheit bei geringerer Leistung bieten, während Fast Asymmetric Hardware Crypto FAHC und Fast Hash Hardware FHHC eine schnellere Leistung bei moderatem Sicherheitsniveau bieten.

Die Netzwerkschnittstelle NI der System-on-Chip-Architektur SOC kann einen Krypto-Beschleuniger CA enthalten. Der Krypto-Beschleuniger CA kann zur Beschleunigung kryptographischer Operationen für Netzwerkkommunikation verwendet werden. Dies kann die Sicherheit und Leistung der Datenübertragung über das Netzwerk verbessern.

Die System-on-Chip-Architektur SOC kann auch einen Configuration Hardening Controller CHC enthalten, der mit der Hardware-Krypto-Engine HWCE und einem einmal programmierbaren Speicher OTP interagiert. Der Configuration Hardening Controller CHC kann die Konfiguration der auf die Hardware-Krypto-Engine HWCE angewendeten Härtungsmaßnahmen basierend auf den im einmal programmierbaren Speicher OTP gespeicherten Informationen steuern.

Der einmal programmierbare Speicher OTP kann verschiedene Sicherheitshärtungskonfigurationen SHC für verschiedene Komponenten der System-on-Chip-Architektur SOC speichern. Zum Beispiel kann der einmal programmierbarer Speicher OTP Sicherheitshärtungskonfigurationen SHC für die GPU GPU SHC-GPU, für die Hardware-Krypto-Engine HWCE SHC-HWCE, für den Prozessorkern PC SHC-PC und für den sicheren Boot-Betrieb SBO SHC-SB sowie weitere Sicherheitshärtungskonfigurationen SHC-AIIE, SHC-TC, SHC-NW speichern. Diese Konfigurationen können den Grad der Härtung bestimmen, der auf die jeweiligen Komponenten angewendet wird. Zum Beispiel kann die Sicherheitshärtungskonfiguration SHC-HWCE für die Hardware-Krypto-Engine HWCE die von der Hardware-Krypto-Engine HWCE verwendete Härtungsvariante bestimmen, während die Sicherheitshärtungskonfigurationen SHC-PC für den Prozessorkern PC die auf den Prozesserkern PC angewendeten Härtungsmaßnahmen bestimmen kann.

Im dargestellten Ausführungsbeispiel kann der einmal programmierbare Speicher OTP auch kryptographische Schlüssel K speichern, die für sichere Operationen wie Verschlüsselung, Entschlüsselung und digitale Signatur verwendet werden. Der der einmal programmierbare Speicher OTP kann beispielsweise ein nichtflüchtiger Speicher sein, der nur einmal programmiert werden kann, um die Sicherheit und Integrität der gespeicherten Informationen zu gewährleisten.

Mit Bezug auf FIG. 1 enthält die System-on-Chip-Architektur SOC auch eine Kl-Beschleuniger-Engine AIAE und eine Grafikverarbeitungseinheit GPU. In einigen Fällen können sowohl die Kl-Beschleuniger-Engine AIAE als auch die Grafikverarbeitungseinheit GPU unmasked Processing UP und Masked Processing MP durchführen. Unmasked Processing UP kann die Verarbeitung von Daten ohne zusätzliche Sicherheitsmaßnahmen beinhalten, während Masked Processing MP die Verarbeitung von Daten mit zusätzlichen Sicherheitsmaßnahmen wie Datenmasking oder Verschlüsselung beinhalten kann. Die Wahl zwischen Unmasked Processing UP und Masked Processing MP kann basierend auf den Sicherheitsanforderungen der spezifischen Operation oder Anwendung getroffen werden.

Das SOC enthält auch eine Security Hardening Attestation Unit SHAU. In einigen Aspekten kann die Security Hardening Attestation Unit SHAU Security Hardening Attestations SHAtt generieren, die eine kryptographisch geschützte Bestätigung der aktiven Sicherheitskonfigurationen des System-on-Chip SOC liefern. Die Security Hardening Attestation SHAtt kann an externe Komponenten oder Systeme über das Netzwerk N oder an einen Programmierer P über eine separate Schnittstelle RSZDZ, etwa RS232 oder I2C oder JTAG, übertragen werden. Dies ermöglicht externen Systemen oder Benutzern die Überprüfung der Sicherheitskonfigurationen des System-on-Chip SOC, was besonders nützlich sein kann in Szenarien, in denen das System-on-Chip SOC Teil eines größeren Systems oder Netzwerks ist.

Das SOC kann über verschiedene Verbindungen mit externen Komponenten kommunizieren. Eine Ethernet-Schnittstelle ETH kann das System-on-Chip SOC mit dem Netzwerk N verbinden, das wiederum mit einem Webdienst WS verbunden sein kann. Dies ermöglicht dem System-on-Chip SOC die Kommunikation mit externen Systemen und Diensten und ermöglicht eine breite Palette von vernetzten Anwendungen. Eine Serial-Peripheral-Interface-Schnittstelle SPI kann das System-on-Chip SOC mit einem Flash-Speicher F verbinden, der eine Firmware FW enthält. Die Firmware FW kann Softwareanweisungen enthalten, die den Betrieb des System-on-Chip SOC steuern. Die separate Schnittstelle RSZDZ verbindet das System-on-Chip SOC mit dem Programmierer P. Der Programmierer P kann verwendet werden, um den einmal programmierbaren Speicher OTP des System-on-Chip SOC zu programmieren, die Sicherheitshärtungskonfigurationen festzulegen und kryptographische Schlüssel K zu speichern.

Das System-on-Chip SOC umfasst im dargestellten Ausführungsbeispiel mehrere Manipulationssensoren TS und einen Speicher TC, der zum Speichern von Sensordaten des einen oder der mehreren Manipulationssensoren TS ausgelegt ist. Die von den Manipulationssensoren TS erfassten Sensordaten können in der Attestierung SHAtt enthalten oder darin referenziert sein.

Das System-on-Chip SOC ist im dargestellten Ausführungsbeispiel dazu ausgelegt, eine Sicherheitsmaßnahme in Abhängigkeit von Sensordaten der Manipulationssensoren (TS) auszuführen. Die Sicherheitsmaßnahme umfasst dabei einen Neustart und ein Aktivieren eines ausfallsicheren Betriebsmodus. In weiteren Ausführungsbeispielen, welche im Übrigen dem dargestellten Ausführungsbeispiel entsprechen, kann die Sicherheitsmaßnahme das Einleiten einer Resilienz-/Wiederherstellungsaktion sowie das Löschen von Schlüsseln und das Schreiben eines Fehlerspeichers sowie das Aktualisieren eines Manipulationsereigniszählers umfassen.

## Patentansprüche

1. Verfahren zur Implementierung mindestens einer kryptographischen Funktionalität in einem Halbleiterbaustein (SOC), wobei die kryptographische Funktionalität (HWCE) mit einer Robustheit (UHCC, FAHC, FHHC) implementiert wird, die von Konfigurationsinformationen (SHC) des Halbleiterbausteins (SOC) abhängt.

2. Verfahren nach einem der vorhergehenden Ansprüche, wobei die kryptographische Funktionalität (HWCE) eine Konfiguration einer hardwarebasierten Halbleiterschaltung des Halbleiterbausteins umfasst.

3. Verfahren nach einem der vorhergehenden Ansprüche, wobei die Halbleiterschaltung einen Krypto-Beschleuniger (CA) und/oder einen sicheren Boot (SBO) und/oder einen Manipulationsschutz und/oder eine Grafikprozessorschaltung (GPU) und/oder eine Netzwerkkommunikationsverschlüsselungsschaltung bildet.

4. Verfahren nach einem der vorhergehenden Ansprüche, wobei die Konfiguration in einem einmal programmierbaren nichtflüchtigen Speicher (OTP) des Halbleiterbausteins (SOC) implementiert ist.

5. Verfahren nach einem der vorhergehenden Ansprüche, wobei eine Implementierung einer oder mehrerer kryptographischer Funktionalitäten (HWCE) mit mehreren Robustheitsstufen so durchgeführt wird, dass die eine oder mehreren kryptographischen Funktionalitäten mit den mehreren Robustheitsstufen während der Laufzeit des Halbleiterbausteins zugänglich sind.

6. Verfahren nach dem vorhergehenden Anspruch, wobei eine Steuerlogik (HC) vorgesehen ist, die auf die eine oder mehreren kryptographischen Funktionalitäten (HWCE), insbesondere mit den mehreren Robustheitsstufen, in Abhängigkeit von einer oder mehreren Krypto-Operationen zugreifen kann.

7. Verfahren nach dem vorhergehenden Anspruch, wobei die Steuerlogik (HC) mit einer digitalen Schaltung und/oder mit einer Zustandsmaschine und/oder mit einem Mikrocode und/oder mit einer Firmware gebildet ist.

8. Verfahren nach einem der vorhergehenden Ansprüche, wobei die Robustheit (UHCC, FAHC, FHHC) mittels einer Attestierung bescheinigt wird und die Attestierung vorzugsweise mittels einer Schnittstelle des Halbleiterbausteins zur Verfügung gestellt wird.

9. Verfahren nach dem vorhergehenden Anspruch, wobei die Attestierung einem Prozessorkern des Halbleiterbausteins (SOC) zur Verfügung gestellt wird.

10. Halbleiterbaustein, der zur Implementierung einer kryptographischen Funktionalität mit einer Robustheit (UHCC, FAHC, FHHC) ausgebildet ist, die von Konfigurationsinformationen (SHC) des Halbleiterbausteins abhängt.

11. Halbleiterbaustein nach einem der vorhergehenden Ansprüche, bei welchem die Robustheit (UHCC, FAHC, FHHC) mit einer Attestierung (SHAtt) bescheinigt wird.

12. Halbleiterbaustein nach einem der vorhergehenden Ansprüche mit einer Schnittstelle (ETH, RSZDZ), mittels derer die Attestierung (SHAtt)ausgegeben werden kann.

13. Halbleiterbaustein nach einem der vorhergehenden Ansprüche, umfassend einen oder mehrere Manipulationssensoren (TS) und einen Speicher /(TC), der zum Speichern von Sensordaten des einen oder der mehreren Manipulationssensoren (TS)ausgebildet ist.

14. Halbleiterbaustein nach einem der vorhergehenden Ansprüche, der dazu ausgelegt ist, eine Sicherheitsmaßnahme in Abhängigkeit von Sensordaten des einen oder der mehreren Manipulationssensoren auszuführen

15. Halbleiterbaustein nach einem der vorhergehenden Ansprüche, wobei die Sicherheitsmaßnahme eine oder mehrere der folgenden Aktionen umfasst: einen Neustart und/oder Aktivieren eines ausfallsicheren Betriebsmodus und/oder Einleiten einer Resilienz-/Wiederherstellungsaktion und/oder Löschen von Schlüsseln und/oder Schreiben eines Fehlerspeichers und/oder Aktualisieren eines Manipulationsereigniszählers.
